# EUROPEAN PATENT APPLICATION

(11) **EP 4 628 938 A1**
(43) Date of publication of application: **08.10.2025**
(21) Application number: 22966959.3
(22) Date of filing: 02.12.2022
(51) Int. Cl.: G01S 17/06, G01S 7/02

(54) **TRANSMITTING SYSTEM, DETECTION APPARATUS, RADAR, TERMINAL DEVICE, AND VEHICLE END**

(71) Applicant: Shenzhen Yinwang Intelligent Technologies Co., Ltd., Shenzhen, Guangdong 518129 (CN)
(72) Inventor: CHENG, Zhiwen, Shenzhen, Guangdong 518129 (CN); CHANG, Guanghong, Shenzhen, Guangdong 518129 (CN)
(74) Representative: Maiwald GmbH
(86) International application number: PCT/CN2022/136345
(87) International publication number: WO 2024/113373

(57) **Abstract**

A transmit system, a detection apparatus, a radar, a terminal device, and a vehicle are provided, and relate to the field of millimeter-wave radar technologies. The transmit system includes M transmit antennas, where M is an integer greater than 2. The M transmit antennas are respectively configured to transmit M transmit signals, and the M transmit signals are used to detect a target. The M transmit signals have M different center frequencies, and frequency differences between adjacent center frequencies corresponding to transmit signals in the M transmit signals are different. Such a transmit system divides spectrum sampling resources of the transmit signals into M parts in a non-uniform manner. The M parts respectively correspond to the M transmit signals and the M transmit signal are transmitted through the M transmit antennas, so that a sampling rate requirement can be reduced during range diversity, range ambiguity is allowed, and range ambiguity resolving is performed in combination of echo signals corresponding to the M transmit signals received by a receive end. This reduces a sampling capability requirement of the transmit system on an ADC.

## Description

### TECHNICAL FIELD

This application relates to the field of millimeter-wave radar technologies, and in particular, to a transmit system, a detection apparatus, a radar, a terminal device, and a vehicle.

### BACKGROUND

A millimeter-wave radar is a radar that operates in a millimeter-wave band for detection. The millimeter-wave radar measures information such as a range, a speed, and an orientation (angle) of a target by transmitting an electromagnetic wave signal and listening to, from an environment, a reflected signal of the electromagnetic wave signal reflected by the target.

Currently, to improve angle resolution of a millimeter wave radar, a virtual aperture is usually used, and a plurality of transmit antennas, a plurality of receive antennas, and a plurality of analog-to-digital converter (analog-to-digital converter, ADC) channels are used to implement multi-input multi-output (multi-input multi-output, MIMO) sending of a plurality of antennas.

However, currently, a common multi-transmit channel-MIMO radar needs to depend on a high sampling capability of an ADC. This needs high implementation costs.

### SUMMARY

Embodiments of this application provide a transmit system, a detection apparatus, a radar, a terminal device, and a vehicle, to reduce a sampling capability requirement of a multi-transmit channel-MIMO radar on an ADC, and reduce implementation costs.

According to a first aspect, an embodiment of this application provides a transmit system. The transmit system includes:
M transmit antennas, where M is an integer greater than 2.

The M transmit antennas are respectively configured to transmit M transmit signals, and the M transmit signals are used to detect a target.

The M transmit signals have M different center frequencies, and frequency differences between adjacent center frequencies corresponding to transmit signals in the M transmit signals are different.

In this embodiment of this application, the transmit system is provided. In the M transmit signals transmitted by the transmit system, frequency differences between adjacent center frequencies corresponding to transmit signals are different. It may be understood that the transmit system divides spectrum sampling resources of the transmit signals into M parts in a non-uniform manner, and the M parts respectively correspond to the M transmit signals. Because the spectrum sampling resources corresponding to the M transmit signals are allocated in the non-uniform manner, more accurate identification of antennas of echo signals corresponding to these transmit signals can be implemented based on a frequency difference between transmit signals corresponding to different transmit antennas. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC. It can be learned that, in this embodiment of this application, non-uniform frequency design is performed on frequencies of transmit signal of different transmit antennas, so that more accurate identification of antennas of echo signals corresponding to these transmit signals can be implemented. Therefore, an effective detection range of the transmit system can be increased under a same sampling rate condition. This is equivalent to reducing the sampling capability requirement on the ADC under a same detection range requirement.

In a possible implementation, the M transmit signals are obtained by M frequency shifters respectively performing frequency shift processing on M sub-signals.

In an implementation of this application, a possible specific implementation of the M transmit signals is provided. Specifically, the M transmit signals may be obtained by the M frequency shifters respectively performing frequency shift processing on the M sub-signals. It may be understood that, frequency shift values for the M frequency shifters to perform frequency shift on the M sub-signals are not completely the same, so that frequency differences between adjacent center frequencies corresponding to transmit signals in the obtained M transmit signals are different. More accurate identification of antennas of echo signals corresponding to these transmit signals can be implemented based on the frequency differences between the transmit signals corresponding to the different transmit antennas. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC.

According to a second aspect, an embodiment of this application provides a detection apparatus. The detection apparatus includes a frequency shift unit and the transmit system according to the first aspect or any possible implementation of the first aspect.

The frequency shift unit is configured to perform frequency shift processing on M sub-signals to obtain M transmit signals.

In this embodiment of this application, the detection apparatus is provided. The frequency shift unit in the detection apparatus is configured to perform frequency shift processing on the M sub-signals to obtain the M transmit signals. The M transmit signals may be transmitted by the transmit system according to the first aspect or any possible implementation of the first aspect, to detect a target. It may be understood that, frequency shift values for the frequency shift unit to perform frequency shift on the M sub-signals are not completely the same, so that frequency differences between adjacent center frequencies corresponding to transmit signals in the obtained M transmit signals are different. More accurate identification of antennas of echo signals corresponding to these transmit signals can be implemented based on the frequency differences between the transmit signals corresponding to the different transmit antennas. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC. It can be learned that, in this embodiment of this application, non-uniform frequency design is performed on frequencies of transmit signal of different transmit antennas, so that more accurate identification of antennas of echo signals corresponding to these transmit signals can be implemented. Therefore, an effective detection range of the detection apparatus can be increased under a same sampling rate condition. This is equivalent to reducing the sampling capability requirement on the ADC under a same detection range requirement.

In a possible implementation, the frequency shift unit includes:
M frequency shifters.

The M frequency shifters are respectively configured to perform frequency shift processing on the M sub-signals to obtain the M transmit signals.

In an implementation of this application, a possible implementation of the frequency shift unit is provided. Specifically, the frequency shift unit includes M frequency shifters. The M frequency shifters are respectively configured to perform frequency shift processing on the M sub-signals. It may be understood that frequency shift values for the M frequency shifters to perform frequency shift on the M sub-signals are not completely the same. Therefore, after the frequency shift processing, the M transmit signals having different frequency differences between adjacent center frequencies corresponding to transmit signals can be obtained.

In a possible implementation, the detection apparatus further includes:
N receive antennas, where N is an integer greater than 2.

The N receive antennas are separately configured to receive echo signals corresponding to the M transmit signals.

In an implementation of this application, a possible specific implementation of the detection apparatus is provided. Specifically, the detection apparatus further includes the N receive antennas. The N receive antennas are separately configured to receive the echo signals corresponding to the M transmit signals. The echo signals corresponding to the M transmit signals may be used to perform range ambiguity resolving, so that a sampling capability requirement of the detection apparatus on an ADC can be reduced.

In a possible implementation, the detection apparatus further includes:
a frequency mixing unit.

The frequency mixing unit is configured to separately perform frequency mixing processing on the M echo signals and one of the M sub-signals to obtain M frequency-mixed signals, and the M frequency-mixed signals are used to determine a range to the target.

In an implementation of this application, a possible specific implementation of the detection apparatus is provided. Specifically, the detection apparatus further includes the frequency mixing unit, configured to separately perform frequency mixing processing on M mixed echo signals received by a receive end and an original signal (that is, the one of the M sub-signals) on which frequency shift is not performed, to obtain the M frequency-mixed signals. The M frequency-mixed signals may be used to determine an actual range to the target, so that an effective detection range of the detection apparatus can be increased under a same sampling rate condition, or a sampling capability requirement on an ADC can be met under a same detection range requirement.

In a possible implementation, the frequency mixing unit includes:
N frequency mixers.

The N frequency mixers are separately configured to perform frequency mixing processing on the M echo signals and one of the M sub-signals to obtain the M frequency-mixed signals.

In an implementation of this application, a possible specific implementation of the frequency mixing unit is provided. Specifically, the frequency mixing unit includes the N frequency mixers. The N frequency mixers are separately configured to perform frequency mixing processing on the M mixed echo signals received by the receive end and an original signal (that is, the one of the M sub-signals) on which frequency shift is not performed, so that M frequency-mixed signals used to determine an actual range to the target can be obtained after the frequency mixing processing.

In a possible implementation, the detection apparatus further includes:
a processing unit.

The processing unit is configured to determine a correspondence between the M echo signals and the M transmit signals based on the frequency differences between the M transmit signals.

In an implementation of this application, a possible specific implementation of the detection apparatus is provided. Specifically, the detection apparatus further includes the processing unit, configured to determine the correspondence between the M echo signals and the M transmit signals based on the frequency differences between the M transmit signals. It may be understood that, because the spectrum sampling resources corresponding to the M transmit signals are allocated in a non-uniform manner, and frequency differences between transmit signals corresponding to different transmit antennas are different, the correspondence between the M echo signals and the M transmit antennas can be determined based on the frequency differences between the M transmit signals. According to embodiments of this application, the correspondence between the M echo signals and the M transmit signals is determined, so that range ambiguity resolving can be implemented, thereby reducing a sampling capability requirement of the transmit system on an ADC.

In a possible implementation, the processing unit is further configured to determine a range to the target based on the correspondence between the M echo signals and the M transmit signals.

In an implementation of this application, a possible specific implementation of the processing unit is provided. Specifically, the processing unit may be further configured to determine an actual range to the target based on the correspondence between the M echo signals and the M transmit signals. It may be understood that, in comparison with an original signal on which frequency shift is not performed (that is, the one of the M sub-signals), a range value that is in a range profile formed by the M echo signals and that corresponds to an echo signal corresponding to a transmit signal on which no frequency shift is performed or a smallest frequency shift amount is performed is the actual range to the target. According to embodiments of this application, the actual range to the target can be determined, so that an effective detection range of the detection apparatus can be increased under a same sampling rate condition, or a sampling capability requirement on an ADC can be met under a same detection range requirement.

In a possible implementation, the detection apparatus further includes:
a filtering unit and a sampling unit.

The filtering unit is configured to perform filtering processing on the M frequency-mixed signals.

The sampling unit is configured to sample the M frequency-mixed signals on which the filtering processing is performed, to obtain M digital signals, and the M digital signals are used to determine the range to the target.

In an implementation of this application, a possible specific implementation of the detection apparatus is provided. Specifically, the filtering unit in the detection apparatus is configured to perform filtering processing on the M frequency-mixed signals, the sampling unit in the detection apparatus is configured to sample the M frequency-mixed signals on which the filtering processing is performed, to obtain the M digital signals, and the M digital signals may be used to perform range ambiguity resolving, so that a sampling capability requirement of the detection apparatus on an ADC can be reduced.

In a possible implementation, a filtering bandwidth of the filtering unit is greater than at least twice a sampling bandwidth of the sampling unit.

In an implementation of this application, a possible specific implementation of the filtering unit and the sampling unit is provided. Specifically, a filtering bandwidth of the filtering unit is greater than at least twice a sampling bandwidth of the sampling unit, so that all echo signals obtained after the M transmit signals pass through the target can be received in a lossless manner for range ambiguity resolving.

In a possible implementation, the filtering unit includes:
N intermediate frequency filters.

The N intermediate frequency filters are separately configured to perform filtering processing on the M frequency-mixed signals.

In a possible implementation, the sampling unit includes:
N analog-to-digital converters.

The N analog-to-digital converters are separately configured to sample the M frequency-mixed signals on which the filtering processing is performed, to obtain the M digital signals.

According to a third aspect, an embodiment of this application provides a transmit system. The transmit system includes:
M transmit antennas, where M is an integer greater than 2.

The M transmit antennas are respectively configured to transmit M transmit signals, and the M transmit signals are used to detect a target.

Center frequencies of the M transmit signals are located on M frequency bands in W equally-spaced frequency bands, where W is an integer greater than M.

In this embodiment of this application, the transmit system is provided. The center frequencies of the M transmit signals transmitted by the transmit system are located on the M frequency bands in the W equally-spaced frequency bands. It may be understood that the transmit system divides spectrum sampling resources of transmit signals into W parts in a uniform manner, transmits, through only the M transmit antennas, the M transmit signals corresponding to any M spectrum sampling resources, and does not transmit transmit signals corresponding to the W-M remaining spectrum resources. Because the spectrum sampling resources corresponding to the W equally-spaced frequency bands are allocated in the uniform manner, more accurate identification of antennas of echo signals corresponding to these transmit signals can be implemented based on an unoccupied frequency band in the W equally-spaced frequency bands. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC. It can be learned that, in this embodiment of this application, according to a frequency design of uniform division of spectrum sampling resources, a total division quantity is greater than a quantity of transmit antennas, and transmit signals corresponding to frequencies whose quantity is the same as the quantity of antennas are selected for transmitting, so that more accurate identification of antennas of echo signals corresponding to the transmit signals can be implemented. This can increase an effective detection range of the transmit system under a same sampling rate condition. This is equivalent to reducing the sampling capability requirement on the ADC under a same detection range requirement.

In a possible implementation, the M transmit signals are obtained by M frequency shifters respectively performing frequency shift processing on M sub-signals.

In an implementation of this application, a possible specific implementation of the M transmit signals is provided. Specifically, the M transmit signals may be obtained by the M frequency shifters respectively performing frequency shift processing on the M sub-signals. It may be understood that, frequency shift values for the M frequency shifters to perform frequency shift on the M sub-signals are an integer multiple of a value, so that the center frequencies of the obtained M transmit signals are located on the M frequency bands in the W equally-spaced frequency bands, and more accurate identification of antennas of echo signals corresponding to these transmit signals can be implemented based on the unoccupied frequency band in the W equally-spaced frequency bands. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC.

According to a fourth aspect, an embodiment of this application provides a detection apparatus. The detection apparatus includes a frequency shift unit and the transmit system according to the third aspect or any possible implementation of the third aspect.

The frequency shift unit is configured to perform frequency shift processing on M sub-signals to obtain M transmit signals.

In this embodiment of this application, the detection apparatus is provided. The frequency shift unit in the detection apparatus is configured to perform frequency shift processing on the M sub-signals to obtain the M transmit signals. The M transmit signals may be transmitted by the transmit system according to the third aspect or any possible implementation of the third aspect, to detect a target. It may be understood that, frequency shift values for the frequency shift unit to perform frequency shift on the M sub-signals are an integer multiple of a value, so that the center frequencies of the obtained M transmit signals are located on the M frequency bands in W equally-spaced frequency bands, and more accurate identification of antennas of echo signals corresponding to these transmit signals can be implemented based on the unoccupied frequency band in the W equally-spaced frequency bands. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC. It can be learned that, in this embodiment of this application, according to a frequency design of uniform division of spectrum sampling resources, a total division quantity is greater than a quantity of transmit antennas, and transmit signals corresponding to frequencies whose quantity is the same as the quantity of antennas are selected for transmitting, so that more accurate identification of antennas of echo signals corresponding to the transmit signals can be implemented. This can increase an effective detection range of the detection apparatus under a same sampling rate condition. This is equivalent to reducing the sampling capability requirement on the ADC under a same detection range requirement.

In a possible implementation, the frequency shift unit includes:
M frequency shifters.

The M frequency shifters are respectively configured to perform frequency shift processing on the M sub-signals to obtain the M transmit signals.

In an implementation of this application, a possible implementation of the frequency shift unit is provided. Specifically, the frequency shift unit includes M frequency shifters. The M frequency shifters are respectively configured to perform frequency shift processing on the M sub-signals. It may be understood that frequency shift values for M frequency shifters to perform of frequency shift on the M channels sub-signals are an integer multiple of a value. Therefore, after the frequency shift processing, the M transmit signals whose center frequencies are located on the M frequency bands in the W equally-spaced frequency bands can be obtained.

In a possible implementation, the detection apparatus further includes:
N receive antennas, where N is an integer greater than 2.

The N receive antennas are separately configured to receive echo signals corresponding to the M transmit signals.

In an implementation of this application, a possible specific implementation of the detection apparatus is provided. Specifically, the detection apparatus further includes the N receive antennas. The N receive antennas are separately configured to receive the echo signals corresponding to the M transmit signals. The echo signals corresponding to the M transmit signals may be used to perform range ambiguity resolving, so that a sampling capability requirement of the detection apparatus on an ADC can be reduced.

In a possible implementation, the detection apparatus further includes:
a frequency mixing unit.

The frequency mixing unit is configured to separately perform frequency mixing processing on the M echo signals and one of the M sub-signals to obtain M frequency-mixed signals, and the M frequency-mixed signals are used to determine a range to the target.

In an implementation of this application, a possible specific implementation of the detection apparatus is provided. Specifically, the detection apparatus further includes the frequency mixing unit, configured to separately perform frequency mixing processing on M mixed echo signals received by a receive end and an original signal (that is, the one of the M sub-signals) on which frequency shift is not performed, to obtain the M frequency-mixed signals. The M frequency-mixed signals may be used to determine an actual range to the target, so that an effective detection range of the detection apparatus can be increased under a same sampling rate condition, or a sampling capability requirement on an ADC can be met under a same detection range requirement.

In a possible implementation, the frequency mixing unit includes:
N frequency mixers.

The N frequency mixers are separately configured to perform frequency mixing processing on the M echo signals and one of the M sub-signals to obtain the M frequency-mixed signals.

In an implementation of this application, a possible specific implementation of the frequency mixing unit is provided. Specifically, the frequency mixing unit includes the N frequency mixers. The N frequency mixers are separately configured to perform frequency mixing processing on the M mixed echo signals received by the receive end and an original signal (that is, the one of the M sub-signals) on which frequency shift is not performed, so that M frequency-mixed signals used to determine an actual range to the target can be obtained after the frequency mixing processing.

In a possible implementation, the detection apparatus further includes:
a processing unit.

The processing unit is configured to determine a correspondence between the M echo signals and the M transmit signals based on an unoccupied frequency band in the W equally-spaced frequency bands.

In an implementation of this application, a possible specific implementation of the detection apparatus is provided. Specifically, the detection apparatus further includes the processing unit, configured to determine the correspondence between the M echo signals and the M transmit signals based on the unoccupied frequency band in the W equally-spaced frequency bands. It may be understood that, because spectrum sampling resources corresponding to the W equally-spaced frequency bands are allocated in a uniform manner, the unoccupied frequency band in the W equally-spaced frequency bands causes a larger frequency difference between transmit signals corresponding to two transmit antennas. Therefore, the correspondence between the M echo signals and the M transmit antennas may be determined based on the unoccupied frequency band in the W equally-spaced frequency bands. According to embodiments of this application, the correspondence between the M echo signals and the M transmit signals is determined, so that range ambiguity resolving can be implemented, thereby reducing a sampling capability requirement of the transmit system on an ADC.

In a possible implementation, the processing unit is further configured to determine a range to the target based on the correspondence between the M echo signals and the M transmit signals.

In an implementation of this application, a possible specific implementation of the processing unit is provided. Specifically, the processing unit may be further configured to determine an actual range to the target based on the correspondence between the M echo signals and the M transmit signals. It may be understood that, in comparison with an original signal on which frequency shift is not performed (that is, the one of the M sub-signals), a range value corresponding to an echo signal that corresponds to a transmit signal on which no frequency shift is performed or a smallest frequency shift amount is performed and that is in a range profile formed by the M echo signals is the actual range to the target. According to embodiments of this application, the actual range to the target can be determined, so that an effective detection range of the detection apparatus can be increased under a same sampling rate condition, or a sampling capability requirement on an ADC can be met under a same detection range requirement.

In a possible implementation, the detection apparatus further includes:
a filtering unit and a sampling unit.

The filtering unit is configured to perform filtering processing on the M frequency-mixed signals.

The sampling unit is configured to sample the M frequency-mixed signals on which the filtering processing is performed, to obtain M digital signals, and the M digital signals are used to determine the range to the target.

In an implementation of this application, a possible specific implementation of the detection apparatus is provided. Specifically, the filtering unit in the detection apparatus is configured to perform filtering processing on the M frequency-mixed signals, the sampling unit in the detection apparatus is configured to sample the M frequency-mixed signals on which the filtering processing is performed, to obtain the M digital signals, and the M digital signals may be used to perform range ambiguity resolving, so that a sampling capability requirement of the detection apparatus on an ADC can be reduced.

In a possible implementation, a filtering bandwidth of the filtering unit is greater than at least twice a sampling bandwidth of the sampling unit.

In an implementation of this application, a possible specific implementation of the filtering unit and the sampling unit is provided. Specifically, a filtering bandwidth of the filtering unit is greater than at least twice a sampling bandwidth of the sampling unit, so that all echo signals obtained after the M transmit signals pass through the target can be received in a lossless manner for range ambiguity resolving.

In a possible implementation, the filtering unit includes:
N intermediate frequency filters.

The N intermediate frequency filters are separately configured to perform filtering processing on the M frequency-mixed signals.

In a possible implementation, the sampling unit includes:
N analog-to-digital converters.

The N analog-to-digital converters are separately configured to sample the M frequency-mixed signals on which the filtering processing is performed, to obtain the M digital signals.

According to a fifth aspect, an embodiment of this application provides a chip. The chip includes the transmit system according to the first aspect or any possible implementation of the first aspect, or includes the detection apparatus according to the second aspect or any possible implementation of the second aspect, or includes the transmit system according to the third aspect or any possible implementation of the third aspect, or includes the detection apparatus according to the fourth aspect or any possible implementation of the fourth aspect.

According to a sixth aspect, an embodiment of this application provides a radar or a radar system. The radar or the radar system includes the transmit system according to the first aspect or any possible implementation of the first aspect, or includes the detection apparatus according to the second aspect or any possible implementation of the second aspect, or includes the transmit system according to the third aspect or any possible implementation of the third aspect, or includes the detection apparatus according to the fourth aspect or any possible implementation of the fourth aspect, or includes the chip according to the fifth aspect. It should be noted that there may be a plurality of smart sensors integrated with sensors. When the smart sensor includes a millimeter-wave detection function, the smart sensor may also be referred to as a millimeter-wave radar or a millimeter-wave radar system.

According to a seventh aspect, an embodiment of this application provides a terminal device. The terminal device includes the transmit system according to the first aspect or any possible implementation of the first aspect, or includes the detection apparatus according to the second aspect or any possible implementation of the second aspect, or includes the transmit system according to the third aspect or any possible implementation of the third aspect, or includes the detection apparatus according to the fourth aspect or any possible implementation of the fourth aspect, or includes the chip according to the fifth aspect, or includes the radar or the radar system according to the sixth aspect.

According to an eighth aspect, an embodiment of this application provides a vehicle. The vehicle includes the transmit system according to the first aspect or any possible implementation of the first aspect, or includes the detection apparatus according to the second aspect or any possible implementation of the second aspect, or includes the transmit system according to the third aspect or any possible implementation of the third aspect, or includes the detection apparatus according to the fourth aspect or any possible implementation of the fourth aspect, or includes the chip according to the fifth aspect, or includes the radar or the radar system according to the sixth aspect, or includes the terminal device according to the seventh aspect.

In embodiments of this application, spectrum sampling resources of transmit signals are divided into M parts in a non-uniform manner, and the M parts are respectively transmitted by M transmit antennas corresponding to the M transmit signals. Alternatively, spectrum sampling resources of transmit signals are divided into W parts in a uniform manner, but only M transmit signals corresponding to any M spectrum sampling resources are transmitted by M transmit antennas, and transmit signals corresponding to the W-M remaining spectrum resources are not transmitted. Both can implement more accurate identification of antennas of echo signals corresponding to the transmit signals. In this way, a sampling rate requirement can be reduced during range diversity, range ambiguity is allowed, and range ambiguity resolving is performed in combination of the echo signals corresponding to the M transmit signals received by a receive end. This reduces a sampling capability requirement of the transmit system on an ADC. It can be learned that, in embodiments of this application, an effective detection range of the transmit system can be increased under a same sampling rate condition. This is equivalent to reducing the sampling capability requirement on the ADC under a same detection range requirement.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1 is a diagram of radar distribution according to an embodiment of this application;
FIG. 2 is a diagram of an architecture of a radar according to an embodiment of this application;
FIG. 3 is a diagram of an architecture of a radar according to an embodiment of this application;
FIG. 4 is a diagram of a structure of a transmit system according to an embodiment of this application;
FIG. 5 is a diagram of spectrum sampling resource allocation according to an embodiment of this application;
FIG. 6 is a diagram of a signal one-dimensional profile according to an embodiment of this application;
FIG. 7 is a diagram of spectrum sampling resource allocation according to an embodiment of this application;
FIG. 8A is a diagram of a signal one-dimensional profile according to an embodiment of this application;
FIG. 8B is a diagram of a signal one-dimensional profile according to an embodiment of this application;
FIG. 9 is a diagram of a structure of a detection apparatus according to an embodiment of this application;
FIG. 10 is a diagram of a structure of a detection apparatus according to an embodiment of this application;
FIG. 11 is a diagram of a structure of a detection apparatus according to an embodiment of this application;
FIG. 12 is a diagram of a structure of a detection apparatus according to an embodiment of this application;
FIG. 13 is a diagram of a structure of a detection apparatus according to an embodiment of this application;
FIG. 14 is a diagram of a structure of a detection apparatus according to an embodiment of this application;
FIG. 15 is a diagram of a structure of a detection apparatus according to an embodiment of this application;
FIG. 16 is a diagram of a structure of a detection apparatus according to an embodiment of this application;
FIG. 17A is a diagram of a signal one-dimensional profile according to an embodiment of this application;
FIG. 17B is a diagram of a signal one-dimensional profile according to an embodiment of this application; and
FIG. 18 is a diagram of a signal one-dimensional profile according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"An embodiments" mentioned in the specification indicates that a particular feature, structure, or characteristic described with reference to embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in this specification may be combined with other embodiments.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate: Only A exists, only B exists, and both A and B exist, where A and B may be singular or plural. The character "/" generally indicates an "or" relationship between the associated objects before and after the character. "At least one of the following items (pieces)" or a similar expression thereof refers to any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

As described in the background, currently, a common multi-transmit channel-MIMO radar needs to depend on a high sampling capability of an ADC. This needs high implementation costs. This application relates to the field of millimeter-wave radar technologies, and provides a transmit system, a detection apparatus, a radar, a terminal device, and a vehicle, to reduce a sampling capability requirement of a multi-transmit channel-MIMO radar on an ADC, and reduce implementation costs.

To describe the solutions of this application more clearly, the following first describes some radar-related knowledge.

A radar is a transliterated name of Radar in English, and is short for "radio detection and ranging", that is, radio detection and ranging. The radar is used to discover a target and determine a spatial location of the target by using a radio method.

A detection medium of the radar is an electromagnetic wave, and the radar implements detection of a target, for example, range measurement, speed measurement, or azimuth measurement, through transmitting and receiving of the electromagnetic wave. The radar can implement range measurement on the target based on a time of flight of the electromagnetic wave. The time of flight is a time difference between receiving and transmitting of the electromagnetic wave. The radar transmits an electromagnetic wave signal, receives an echo signal of the electromagnetic wave signal, and may implement range measurement on the target based on a time difference between the received echo signal and the transmitted electromagnetic wave signal and a propagation speed of the electromagnetic wave. A range between the radar and the target may be determined based on the following formula: s=c×t/2, where s is the range to the target, t is the time of flight, namely, a time from transmitting of the electromagnetic wave signal from the radar to receiving of the echo signal, and c is the speed of light.

The radar implements speed measurement on the target based on a Doppler effect (Doppler effect). A principle of the Doppler effect is as follows: When a vibration source like a sound, light, and a radio wave moves relative to an observer at a relative speed, frequency of vibration received by the observer is different from frequency generated by the vibration source. When the electromagnetic wave transmitted by the radar moves relative to a detected object, frequency of the echo signal is different from frequency of the transmitted electromagnetic wave signal. When the target approaches an antenna of the radar, the frequency of the echo signal is higher than the frequency of the transmitted electromagnetic wave signal. When the target moves away from the antenna of the radar, the frequency of the echo signal is lower than the frequency of the transmitted electromagnetic wave signal. A frequency change caused by the Doppler effect is referred to as a Doppler frequency shift, which is proportional to the relative speed and inversely proportional to the vibration frequency. Therefore, by detecting a frequency difference between the transmitted electromagnetic wave signal and the echo signal, a moving speed of the target relative to the radar, namely, the relative speed of the target relative to the radar, can be measured.

The radar may measure an azimuth in an amplitude method, a phase method, or the like. The amplitude method is used to measure an angle based on an amplitude value of an echo signal received by an antenna, and a change rule of the amplitude value depends on an antenna directivity pattern and a scanning mode of the antenna. The phase method is used to measure an angle based on a phase difference between echo signals received by a plurality of antenna elements. For example, the radar receives echo signals reflected by a same target by using an antenna array, and calculates the azimuth of the target based on the phase difference of the echo signals.

A detection medium of a millimeter-wave radar is an electromagnetic wave within a specific wavelength range, for example, a microwave. Currently, a millimeter wave (millimeter wave) and a centimeter wave (for example, a centimeter wave in a 24 GHz frequency band) adjacent to the millimeter wave in wave bands are commonly used. The millimeter wave is an electromagnetic wave with a wavelength of 1 to 10 millimeters (mm), and a wavelength of an electromagnetic wave in the 24 GHz frequency band is slightly greater than 10 mm. A wavelength of the detection medium of the millimeter-wave radar is in an overlapped wavelength range of the microwave and a far infrared wave. Therefore, the detection medium of the millimeter-wave radar has characteristics of two types of spectrums. According to a wave propagation theory, a higher frequency indicates a shorter wavelength, higher resolution, and a stronger penetration capability, which indicates that a loss in a propagation process is larger, and a transmission range is shorter. On the contrary, a lower the frequency indicates a longer wavelength, a stronger diffraction capability, and a longer transmission range. Therefore, compared with the microwave, the detection medium of the millimeter-wave radar has high resolution, good directivity, a strong anti-interference capability, and good detection performance. Compared with infrared, the detection media of the millimeter-wave radar has lower atmospheric attenuation, better penetration to smoke and dust, and is less affected by weather. Therefore, the millimeter-wave radar is increasingly widely used in a plurality of fields such as intelligent vehicles, uncrewed aerial vehicles, intelligent transportation, and industrial automation.

Based on a detection range, the radar can be classified into a long-range radar (long range radar, LRR), a medium range radar (mid/medium range radar, MRR), and a short range radar (short range radar, SRR). The LRR has a high requirement on a detection range, and has a low requirement on a width of a detection angular domain. The SRR has a low requirement on a detection range, and has a high requirement on a width of a detection angular domain. A requirement of the MRR on a detection range and a width of an angular domain may be understood as being between that of the LRR and that of the SRR. For example, the detection range of the LRR may be more than 200 meters, and the width of the angular domain may be ±15°; the detection range of the MRR may be within 100 meters, and the width of the angular domain may be ±45°; and the detection range of the SRR may be within 60 meters, and the width of the angular domain may be ±80°. During use, different types of radars may be installed at different locations of a vehicle body based on a function requirement of autonomous driving and a use status of another sensor. A quantity and types of the radars may be selected based on a requirement.

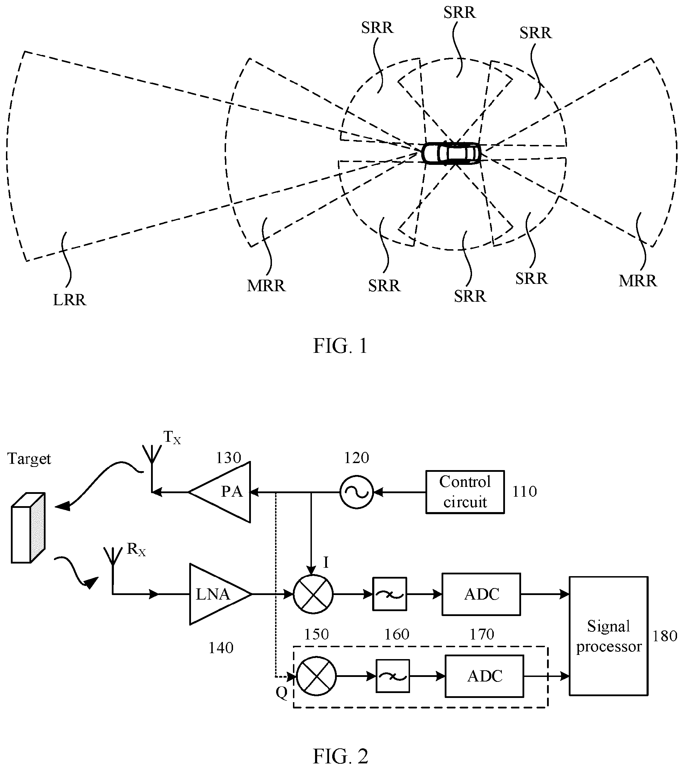

FIG. 1 is a diagram of radar distribution according to an embodiment of this application.

FIG. 1 shows possible installation locations of several types of radars. The installation locations are merely examples, and during actual use, more or fewer radars may be selected, and the types may also be adjusted.

As shown in FIG. 1, an LRR may be installed on the front of a vehicle body and serve as a forward radar; an MRR may be installed on the front or the rear of the vehicle body and serve as a forward radar or a backward radar; and an SRR may be installed on a side of the vehicle body or four corners of the vehicle body and serve as a side radar or an angular radar. In addition, the MRR may alternatively be installed on a side of the vehicle body or the four corners of the vehicle body, and the SRR may alternatively be installed on the front or the rear of the vehicle body.

The radar may be classified based on a modulation scheme (or a radiation mode) of an electromagnetic wave of the radar. The modulation scheme of the electromagnetic wave of the radar includes a pulse mode and a continuous wave mode. Therefore, the radar may be classified into a pulse radar and a continuous wave radar. The continuous wave mode may be further classified into frequency shift keying (frequency shift keying, FSK), phase shift keying (phase shift keying, PSK), a constant-frequency/single-frequency continuous wave (continuous wave, CW), a frequency modulated continuous wave (frequency modulated continuous wave, FMCW), multiple frequency shift keying (multiple frequency shift keying, MFSK), a phase modulated continuous wave (phase modulated continuous wave, PMCW), and another mode. Featuring in multi-target detection, high resolution, and low costs, the FMCW mode has become a mainstream radar modulation scheme.

FIG. 2 is a diagram of an architecture of a radar according to an embodiment of this application.

As shown in FIG. 2, the radar includes a control circuit 110, a signal generator 120, a power amplifier (power amplifier, PA) 130, a low noise amplifier (low noise amplifier, LNA) 140, a frequency mixer 150, a filter 160, an analog-to-digital converter (analog-to-digital converter, ADC) 170, and a signal processor 180. The signal processor, for example, a digital signal processor (digital signal processor, DSP), is usually configured to process a digital signal. The signal generator 120 generates an electromagnetic wave signal (also referred to as a radar signal) waveform under control of the control circuit 110. For example, a radar using an FMCW modulation scheme generates a sawtooth wave or a triangular wave under control of the control circuit 110. The signal generator 120 is, for example, a voltage-controlled oscillator, and the control circuit 110 is configured to generate a control voltage. The generated electromagnetic wave signal waveform is processed through conversion and modulation to a required frequency band, for example, between 76 GHz and 77 GHz, and is radiated to space through a transmit antenna (TX) after being amplified by the PA 130.

An electromagnetic wave signal radiated through the transmit antenna is radiated to a target and then reflected to the space, and is received by a receive antenna (RX) of the radar. After being amplified by the LNA 140, the electromagnetic wave signal is mixed with a reference signal by the frequency mixer 150. The reference signal may usually use the foregoing generated electromagnetic wave signal. After filtering by the filter 160, the frequency mixer 150 may obtain an analog baseband signal, and obtain a digital baseband signal through sampling by the ADC 170. Signal processing of the digital baseband signal is completed in the signal processor 180, to obtain information about a range, a speed, and an angle of the target. In addition, processing such as clustering and/or tracking may be performed based on the obtained information, to further obtain information such as a trajectory, a size, and a type of the target.

The foregoing components of the radar may be integrated based on a requirement to implement miniaturization of the radar. For example, components such as the control circuit 110, the signal generator 120, the power amplifier (power amplifier, PA) 130, the low noise amplifier (low noise amplifier, LNA) 140, the frequency mixer 150, the filter 160, and the analog-to-digital converter (analog-to-digital converter, ADC) 170 may be integrated on at least one chip, for example, integrated into a monolithic microwave integrated circuit (monolithic microwave integrated circuit, MMIC).

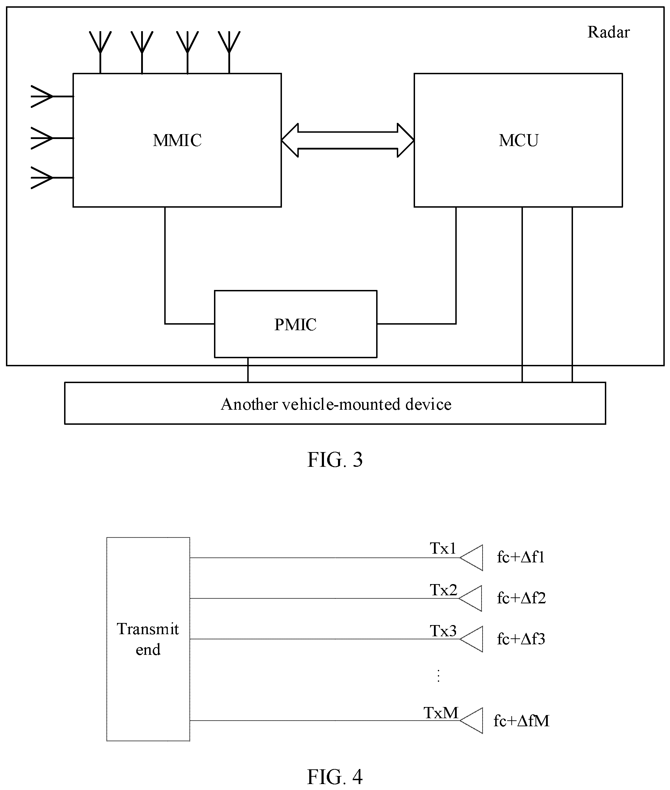

Specifically, refer to FIG. 3. FIG. 3 is a diagram of an architecture of a radar according to an embodiment of this application.

As shown in FIG. 3, the radar includes an MMIC, a microcontroller unit (microcontroller unit, MCU), and a power management integrated circuit (power management integrated circuit, PMIC). The MMIC may integrate a function of a radio frequency part. The MCU may integrate a function of the foregoing baseband part, for example, integrate a function of the foregoing signal processor. In addition, the MCU may further provide a communication interface for communicating with another vehicle-mounted device. The PMIC is a chip that supplies power to a hardware system of the radar.

For a problem of high implementation costs due to depending of a current common multi-transmit channel-MIMO radar on a high sampling capability of an ADC, this application relates to the field of millimeter-wave radar technologies, and provides a transmit system, a detection apparatus, a radar, a terminal device, and a vehicle, to reduce a sampling capability requirement of the multi-transmit channel-MIMO radar on the ADC, and reduce implementation costs.

The following describes, with reference to the accompanying drawings in embodiments of this application, a transmit system and a detection apparatus that are provided in embodiments of this application.

FIG. 4 is a diagram of a structure of a transmit system according to an embodiment of this application.

As shown in FIG. 4, the transmit system includes:
M transmit antennas (for example, Tx1, Tx2, ..., and TxM), where M is an integer greater than 2.

The M transmit antennas are respectively configured to transmit M transmit signals, and the M transmit signals are used to detect a target.

The M transmit signals have M different center frequencies. For example, a center frequency of a transmit signal of the transmit antenna Tx1 may be fc+Δf1, a center frequency of a transmit signal of the transmit antenna Tx2 may be fc+Δf2, a center frequency of a transmit signal of the transmit antenna Tx3 may be fc+Δf3, and a center frequency of a transmit signal of the transmit antenna TxM may be fc+ΔfM. fc represents a center frequency of an original signal, and Δf1, Δf2, Δf3, ..., and ΔfM respectively represent frequency offsets of the M transmit signals relative to the original signal (whose center frequency is fc).

Optionally, in Δf1, Δf2, Δf3, ..., and ΔfM, a case in which a value of a frequency offset is 0 may exist. For example, a value of Δf1 is 0. In this case, in comparison with the original signal (fc), no frequency offset occurs on the transmit signal of the transmit antenna Tx1, or it may be understood that the transmit signal of the transmit antenna Tx1 at this time is the original signal.

It may be understood that Δf1, Δf2, Δf3, ..., and ΔfM are merely used as examples of values of the frequency offsets, and specific values of Δf1, Δf2, Δf3, ..., and ΔfM may be a plurality of possible values. This is not limited in this application, provided that the M transmit signals have M different center frequencies.

In addition, to resolve the technical problem that a current MIMO radar needs to depend on a high sampling capability of an ADC, the M transmit signals need to meet the following conditions.

In this way, a sampling rate requirement can be reduced during range diversity, range ambiguity is allowed, and range ambiguity resolving is performed in combination of echo signals corresponding to the M transmit signals received by a receive end. This reduces a sampling capability requirement of the transmit system on the ADC.

To obtain the M transmit signals that meet the foregoing conditions, embodiments of this application provide the following several design solutions:

### Solution 1:

Frequency differences between adjacent center frequencies corresponding to transmit signals in the M transmit signals transmitted by the transmit system are different.

It may be understood that the transmit system divides spectrum sampling resources of the transmit signals into M parts in a non-uniform manner, and the M parts respectively correspond to the M transmit signals.

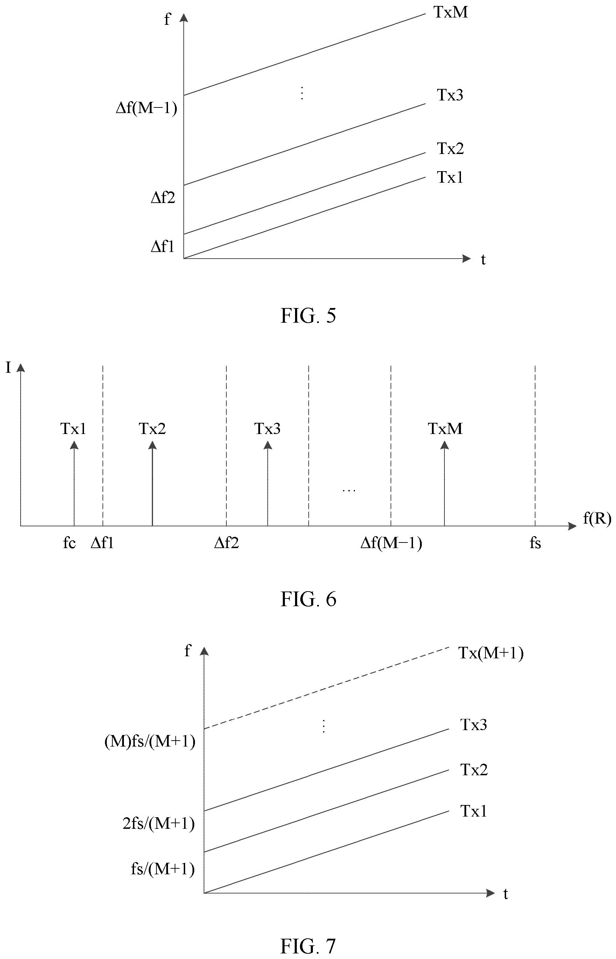

For example, FIG. 5 is a diagram of spectrum sampling resource allocation according to an embodiment of this application.

As shown in FIG. 5, spectrum sampling resources (whose available frequency range is fs) are allocated into M parts in a non-uniform manner, so that in comparison with the foregoing original signal (whose center frequency is fc), frequency offsets of transmit channels are arranged in ascending order as 0, Δf1, Δf2, ..., and Δf(M-1), and respectively correspond to M transmit signals, and center frequencies of the M transmit signals are fc, fc+Δf1, fc+Δf2, ..., and fc+Δf(M-1). The M transmit signals are respectively transmitted by the transmit antennas (Tx1, Tx2, ..., and TxM) corresponding to the transmit channels, and are used to detect a target.

For example, the transmit antenna Tx1 transmits a transmit signal corresponding to a frequency offset of 0, a center frequency of the transmit signal is fc, the transmit antenna Tx2 transmits a transmit signal corresponding to a frequency offset of Δf1, a center frequency of the transmit signal is fc+Δf1, the transmit antenna Tx3 transmits a transmit signal corresponding to a frequency offset of Δf2, a center frequency of the transmit signal is fc+Δf2, the transmit antenna TxM transmits a transmit signal corresponding to a frequency offset of Δf(M-1), a center frequency of the transmit signal is fc+Δf(M-1), and so forth.

It may be understood that the spectrum sampling resources (whose available frequency range is fs) are allocated into M parts in a non-uniform manner, and it is designed that frequency differences between adjacent center frequencies corresponding to transmit signals in the M transmit signals transmitted by the transmit system are different.

A specific design is as follows: A frequency offset of each transmit channel is designed, so that frequency offsets of two adjacent groups of transmit channels are different. For example, a difference between a frequency offset of 0 and a frequency offset of Δf1 is different from a difference between a frequency offset of Δf1 and a frequency offset of Δf2. It should be understood that the frequency offset of 0, the frequency offset of Δf1, and the frequency offset of Δf2 are merely examples of frequency offsets corresponding to two adjacent groups of transmit channels, or the frequency offset of Δf1, the frequency offset of Δf2, and a frequency offset of Δf3 may be merely examples of frequency offsets. This is not limited in embodiments of this application.

It should be understood that the foregoing listed possible design is merely used as an example of descriptions of obtaining the M transmit signals through a frequency difference design when the spectrum use resources (whose available frequency range is fs) are allocated into the M parts in the non-uniform manner. There may be another design solution for obtaining the M transmit signals. This is not limited in embodiments of this application, provided that frequency differences between adjacent center frequencies corresponding to transmit signals in the obtained M transmit signals are different.

Correspondingly, for echo signal one-dimensional profiles corresponding to the M transmit signals designed in the spectrum sampling resource allocation manner shown in FIG. 5, refer to FIG. 6. FIG. 6 is a diagram of a signal one-dimensional profile according to an embodiment of this application.

As shown in FIG. 6, echo signal one-dimensional profiles corresponding to the M transmit signals generate echoes of different transmit signals in terms of range, and range diversity of the echo signal one-dimensional profiles corresponds to a frequency difference design of the transmit signals. A horizontal coordinate f(R) of the one-dimensional profile represents frequency diversity, and a vertical coordinate I represents signal strength corresponding to each frequency in the frequency diversity.

For example, an interval between an echo signal one-dimensional profile corresponding to the transmit signal of the transmit antenna Tx1 and an echo signal one-dimensional profile corresponding to the transmit signal of the transmit antenna Tx2 is different from an interval between the echo signal one-dimensional profile corresponding to the transmit signal of the transmit antenna Tx2 and an echo signal one-dimensional profile corresponding to the transmit signal of the transmit antenna Tx3. Correspondingly, a difference between a frequency offset corresponding to the transmit signal of the transmit antenna Tx1 and a frequency offset corresponding to the transmit signal of the transmit antenna Tx2 is different from a difference between the frequency offset corresponding to the transmit signal of the transmit antenna Tx2 and a frequency offset corresponding to the transmit signal of the transmit antenna Tx3.

It may be understood that, because the spectrum sampling resources corresponding to the M transmit signals are allocated in the non-uniform manner, a sampling rate requirement can be reduced during range diversity based on a frequency difference between transmit signals corresponding to different transmit antennas, range ambiguity is allowed, and range ambiguity resolving is performed in combination of the echo signals corresponding to the M transmit signals received by a receive end. This reduces a sampling capability requirement of the transmit system on an ADC.

It can be learned that, in embodiments of this application, non-uniform frequency design is performed on frequencies of transmit signals of different transmit antennas, so that an effective detection range of the transmit system can be increased under a same sampling rate condition. This is equivalent to reducing the sampling capability requirement on the ADC under a same detection range requirement.

### Solution 2:

Center frequencies of the M transmit signals transmitted by the transmit system are located on M frequency bands in W equally-spaced frequency bands, where W is an integer greater than M.

It may be understood that the transmit system divides spectrum sampling resources of transmit signals into W parts in a uniform manner, transmits, through only the M transmit antennas, the M transmit signals corresponding to any M spectrum sampling resources, and does not transmit transmit signals corresponding to the W-M remaining spectrum resources.

For example, FIG. 7 is a diagram of spectrum sampling resource allocation according to an embodiment of this application.

As shown in FIG. 7, spectrum sampling resources (whose available frequency range is fs) are allocated into W parts in a uniform manner. For brevity and clarity of description, optionally, the spectrum sampling resources fs are allocated into M+1 parts in a uniform manner herein, so that in comparison with the foregoing original signal (whose center frequency is fc), frequency offsets of transmit channels are respectively 0, fs/(M+1), 2fs/(M+1), ..., and (M)fs/(M+1), and respectively correspond to M+1 transmit signals, center frequencies of the M transmit signals are respectively fc, fc+fs/(M+1), fc+2fs/(M+1), ..., and fc+(M)fs/(M+1). The M transmit signals are randomly selected from the M transmit signals and are transmitted by the transmit antennas (Tx1, Tx2, ..., and TxM) corresponding to the transmit channels, to detect a target, and the one remaining transmit signal is not transmitted.

For example, the transmit antenna Tx1 transmits a transmit signal corresponding to a frequency offset of 0, a center frequency of the transmit signal is fc, the transmit antenna Tx2 transmits a transmit signal corresponding to a frequency offset of fs/(M+1), a center frequency of the transmit signal is fc+fs/(M+1), the transmit antenna Tx3 transmits a transmit signal corresponding to a frequency offset of 2fs/(M+1), a center frequency of the transmit signal is fc+2fs/(M+1), the transmit antenna TxM transmits a transmit signal corresponding to a frequency offset of (M-1)fs/(M+1), a center frequency of the transmit signal is fc+(M-1)fs/(M+1), and so forth. A transmit signal corresponding to a frequency offset of (M)fs/(M+1) is not transmitted (as shown in a dashed line in FIG. 7).

It may be understood that the spectrum sampling resources fs are allocated into M+1 parts in a uniform manner. It is designed as follows: Center frequencies of the M transmit signals transmitted by the transmit system are located on M frequency bands in M+1 equally-spaced frequency bands. A specific design is as follows: Differences between frequency offsets of transmit channels are in an integer multiple relationship, for example, a difference between a frequency offset corresponding to the transmit signal of the transmit antenna Tx3 and a frequency offset corresponding to the transmit signal of the transmit antenna Tx1 is an integer multiple of a difference between a frequency offset corresponding to the transmit signal of the transmit antenna Tx2 and the frequency offset corresponding to the transmit signal of the transmit antenna Tx1.

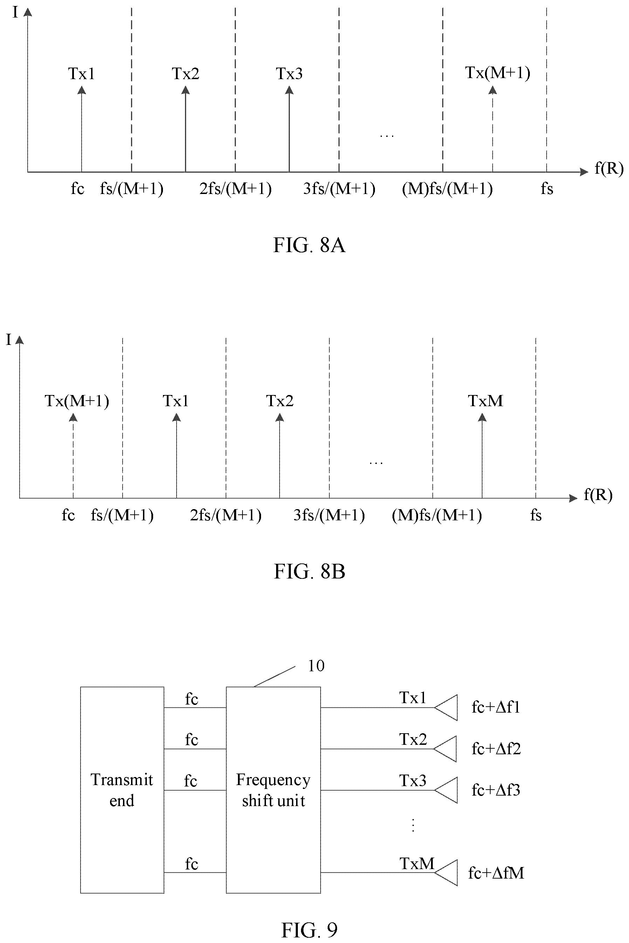

Correspondingly, for echo signal one-dimensional profiles corresponding to the M transmit signals designed in the spectrum sampling resource allocation manner shown in FIG. 7, refer to FIG. 8A and FIG. 8B. FIG. 8A and FIG. 8B are diagrams of two types of signal one-dimensional profiles according to an embodiment of this application.

As shown in FIG. 8A and FIG. 8B, echo signal one-dimensional profiles corresponding to the M transmit signals generate echoes of different transmit signals in terms of range, and range diversity of the echo signal one-dimensional profiles corresponds to a frequency difference design of the transmit signals. A horizontal coordinate f(R) of the one-dimensional profile represents frequency diversity, and a vertical coordinate I represents signal strength corresponding to each frequency in the frequency diversity.

Specifically, as shown in FIG. 8A, echo one-dimensional profiles are shown when the target is in a 1^{st} free range interval, that is, the echo signal one-dimensional profiles formed by the M transmit signals corresponding to the first M parts are selected from the M+1 parts obtained by allocating the spectrum sampling resources fs in the uniform manner. It can be learned that energy distribution for transmit signals is in the first M intervals. For example, an interval between an echo signal one-dimensional profile corresponding to the transmit signal of the transmit antenna Tx1 and an echo signal one-dimensional profile corresponding to the transmit signal of the transmit antenna Tx2 is the same as an interval between the echo signal one-dimensional profile corresponding to the transmit signal of the transmit antenna Tx2 and an echo signal one-dimensional profile corresponding to the transmit signal of the transmit antenna Tx3. Correspondingly, a difference between a frequency offset corresponding to the transmit signal of the transmit antenna Tx1 and a frequency offset corresponding to the transmit signal of the transmit antenna Tx2 is the same as a difference between the frequency offset corresponding to the transmit signal of the transmit antenna Tx2 and a frequency offset corresponding to the transmit signal of the transmit antenna Tx3. In addition, there is no energy distribution for a transmit signal in an (M+1)^{th} interval, and a transmit signal Tx(M+1) corresponding to a frequency offset of (M)fs/(M+1) is not transmitted (as shown in a dashed arrow in FIG. 8A).

As shown in FIG. 8B, echo one-dimensional profiles are shown when the target is in a 2^{nd} free range interval, that is, the echo signal one-dimensional profiles formed by the M transmit signals corresponding to the last M parts are selected from the M+1 parts obtained by allocating the spectrum sampling resources fs in the uniform manner. It can be learned that energy distribution for transmit signals is in the last M intervals, that is, intervals from a 2^{nd} interval to an (M+1)^{th} interval, and there is no energy distribution for a transmit signal in a 1^{st} interval (as shown in a dashed arrow in FIG. 8B).

It may be understood that, because the spectrum sampling resources corresponding to the W equally-spaced frequency bands are allocated in the uniform manner, more accurate identification of antennas of echo signals corresponding to these transmit signals can be implemented based on an unoccupied frequency band in the W equally-spaced frequency bands.

Specifically, the unoccupied frequency band in the W equally-spaced frequency bands causes a larger frequency difference between transmit signals corresponding to two transmit antennas. Therefore, a correspondence between the M echo signals and the M transmit antennas may be determined based on the unoccupied frequency band in the W equally-spaced frequency bands. For example, in FIG. 8A, a frequency band with frequency offsets of (M)fs/(M+1) to fs is not occupied, which indicates that no transmit signal exists on the frequency band, and when the M transmit signals are transmitted, the first M transmit signals are selected, and the transmit signal Tx(M+1) corresponding to the frequency offset of (M)fs/(M+1) is not transmitted. It can be learned that the transmit signal TxM corresponding to the frequency offset of (M-1)fs/(M+1) is transmitted on a frequency band before the frequency band with the frequency offsets of (M)fs/(M+1) to fs. The rest may be deduced by analogy. In this way, the correspondence between the M echo signals and the M transmit antennas can be obtained.

Further, an actual range to the target can be determined based on the correspondence between the M echo signals and the M transmit antennas. Specifically, in comparison with an original signal on which frequency shift is not performed (that is, one of the M sub-signals), a range value corresponding to an echo signal that corresponds to a transmit signal on which no frequency shift is performed or a smallest frequency shift amount is performed and that is in a range profile formed by the M echo signals is the actual range to the target.

In this way, based on the unoccupied frequency band in the W equally-spaced frequency bands, a sampling rate requirement can be reduced during range diversity, range ambiguity is allowed, and range ambiguity resolving is performed in combination of echo signals corresponding to the M transmit signals received by a receive end. This reduces a sampling capability requirement of the transmit system on an ADC.

It can be learned that, in embodiments of this application, according to a frequency design of uniform division of spectrum sampling resources, a total division quantity is greater than a quantity of transmit antennas, and transmit signals corresponding to frequencies whose quantity is the same as the quantity of antennas are selected for transmitting, so that an effective detection range of the transmit system can be increased under a same sampling rate condition. This is equivalent to reducing the sampling capability requirement on the ADC under a same detection range requirement.

According to the transmit system shown in FIG. 4 and the transmit signal frequency design solutions in Solution 1 and Solution 2, this application further provides a detection apparatus, configured to implement target detection in a MIMO sending scenario.

The following describes a detection apparatus provided in this application with reference to FIG. 9 to FIG. 16.

FIG. 9 is a diagram of a structure of a detection apparatus according to an embodiment of this application.

As shown in FIG. 9, the detection apparatus includes a frequency shift unit 10 and the transmit system shown in FIG. 4.

The frequency shift unit 10 in the detection apparatus is configured to perform frequency shift processing on M sub-signals (fc) to obtain M transmit signals. The M transmit signals may be transmitted by the transmit system shown in FIG. 4 to detect a target.

Optionally, frequency shift values used by the frequency shift unit 10 to perform frequency shift on the M sub-signals are not completely the same, so that frequency differences between adjacent center frequencies corresponding to transmit signals in the obtained M transmit signals, that is, the M transmit signals in Solution 1 are different.

It may be understood that, based on a frequency difference between transmit signals corresponding to different transmit antennas, a sampling rate requirement can be reduced during range diversity, range ambiguity is allowed, and range ambiguity resolving is performed in combination of echo signals corresponding to the M transmit signals received by a receive end. This reduces a sampling capability requirement of the transmit system on an ADC.

It can be learned that, in embodiments of this application, non-uniform frequency design is performed on frequencies of transmit signals of different transmit antennas, so that an effective detection range of the detection apparatus can be increased under a same sampling rate condition. This is equivalent to reducing the sampling capability requirement on the ADC under a same detection range requirement.

Optionally, frequency shift values used by the frequency shift unit 10 to perform frequency shift on the M sub-signals are an integer multiple of a value, so that center frequencies of the obtained M transmit signals, that is, the M transmit signals in Solution 2 are located on M frequency bands in W equally-spaced frequency bands.

It may be understood that, based on the unoccupied frequency band in the W equally-spaced frequency bands, a sampling rate requirement can be reduced during range diversity, range ambiguity is allowed, and range ambiguity resolving is performed in combination of echo signals corresponding to the M transmit signals received by a receive end. This reduces a sampling capability requirement of the transmit system on an ADC.

It can be learned that, in embodiments of this application, according to a frequency design of uniform division of spectrum sampling resources, a total division quantity is greater than a quantity of transmit antennas, and transmit signals corresponding to frequencies whose quantity is the same as the quantity of antennas are selected for transmitting, so that an effective detection range of the detection apparatus can be increased under a same sampling rate condition. This is equivalent to reducing the sampling capability requirement on the ADC under a same detection range requirement.

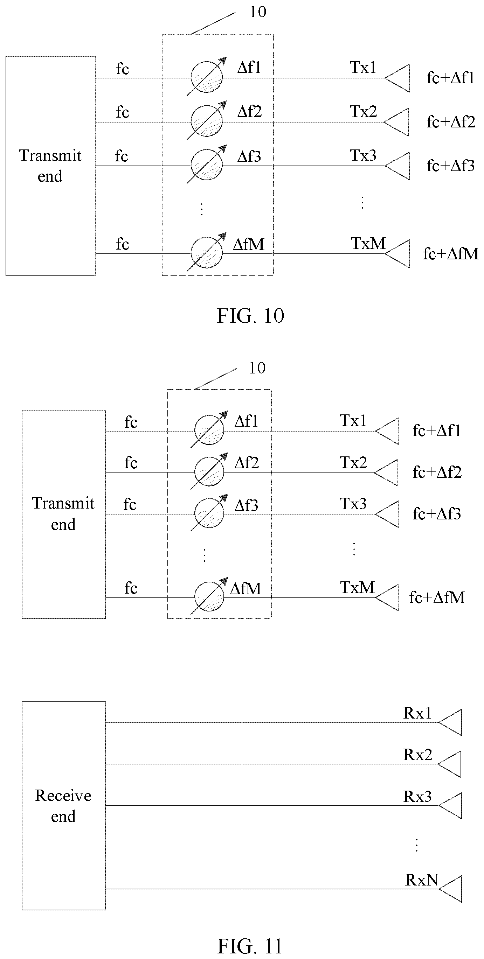

FIG. 10 is a diagram of a structure of a detection apparatus according to an embodiment of this application.

It may be understood that the detection apparatus in this embodiment of this application may be considered as a variation or a supplement to the detection apparatus shown in FIG. 9, or may be considered as an independent solution implementation.

As shown in FIG. 10, the detection apparatus includes a frequency shift unit 10 and the transmit system shown in FIG. 4.

The frequency shift unit 10 includes:
M frequency shifters.

The M frequency shifters are respectively configured to perform frequency shift processing (perform frequency shifts of Δf1, Δf2, Δf3, ..., and ΔfM respectively) on M sub-signals (fc) to obtain M transmit signals (which are fc+Δf1, fc+Δf2, fc+Δf3, ..., and fc+ΔfM respectively).

Optionally, the frequency shift processing performed by the M frequency shifters in this embodiment of this application is similar to the frequency shift processing performed by the frequency shift unit 10 shown in FIG. 9. For details, refer to the foregoing descriptions. Details are not described herein again.

FIG. 11 is a diagram of a structure of a detection apparatus according to an embodiment of this application.

It may be understood that the detection apparatus in this embodiment of this application may be considered as a variation or a supplement to the detection apparatuses shown in FIG. 9 and FIG. 10, or may be considered as an independent solution implementation.

As shown in FIG. 11, the detection apparatus includes M frequency shifters and the transmit system shown in FIG. 4. For a connection relationship, a signal flow direction, and a function description thereof, refer to the descriptions in FIG. 4, FIG. 9, and FIG. 10. Details are not described herein again.

In addition, the detection apparatus in this embodiment of this application further includes:
N receive antennas (for example, Rx1, Rx2, Rx3, ..., and RxN), where N is an integer greater than 2.

The N receive antennas are separately configured to receive echo signals corresponding to the M transmit signals.

The echo signals corresponding to the M transmit signals may be used to perform range ambiguity resolving, so that a sampling capability requirement of the detection apparatus on an ADC can be reduced.

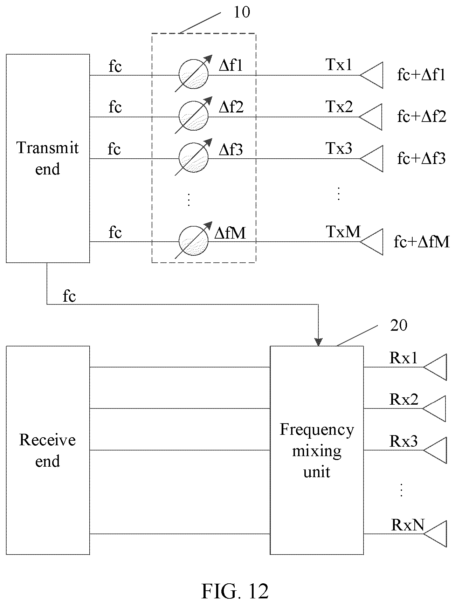

FIG. 12 is a diagram of a structure of a detection apparatus according to an embodiment of this application.

It may be understood that the detection apparatus in this embodiment of this application may be considered as a variation or a supplement to the detection apparatuses shown in FIG. 9 to FIG. 11, or may be considered as an independent solution implementation.

As shown in FIG. 12, the detection apparatus includes M frequency shifters, N receive antennas, and the transmit system shown in FIG. 4. For a connection relationship, a signal flow direction, and a function description thereof, refer to the descriptions in FIG. 4, and FIG. 9 to FIG. 11. Details are not described herein again.

In addition, the detection apparatus in this embodiment of this application further includes:
a frequency mixing unit 20.

The frequency mixing unit 20 is configured to separately perform frequency mixing processing on the M echo signals and one of the M sub-signals (whose center frequency is fc) to obtain M frequency-mixed signals. The M frequency-mixed signals are used to determine a range to a target.

It may be understood that the frequency mixing unit 20 is configured to separately perform frequency mixing processing on M mixed echo signals received by the receive end and an original signal (that is, the one of the M sub-signals) on which frequency shift is not performed, to obtain the M frequency-mixed signals. The M frequency-mixed signals may be used to determine an actual range to the target, so that an effective detection range of the detection apparatus can be increased under a same sampling rate condition, or a sampling capability requirement on an ADC can be met under a same detection range requirement.

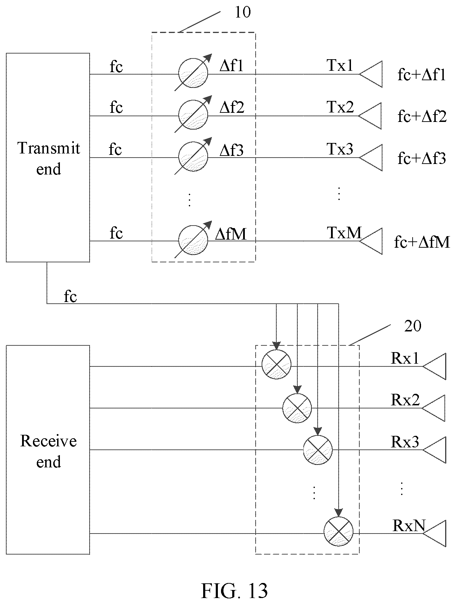

FIG. 13 is a diagram of a structure of a detection apparatus according to an embodiment of this application.

It may be understood that the detection apparatus in this embodiment of this application may be considered as a variation or a supplement to the detection apparatuses shown in FIG. 9 to FIG. 12, or may be considered as an independent solution implementation.

As shown in FIG. 13, the detection apparatus includes M frequency shifters, N receive antennas, a frequency mixing unit 20, and the transmit system shown in FIG. 4. For a connection relationship, a signal flow direction, and a function description thereof, refer to the descriptions in FIG. 4, and FIG. 9 to FIG. 12. Details are not described herein again.

The frequency mixing unit 20 includes:
N frequency mixers.

The N frequency mixers are separately configured to perform frequency mixing processing on the M echo signals and one of the M sub-signals (whose center frequency is fc) to obtain M frequency-mixed signals.

Optionally, the frequency shift processing performed by the N frequency shifters in this embodiment of this application is similar to the frequency mixing processing performed by the frequency mixing unit 20 shown in FIG. 12. For details, refer to the foregoing descriptions. Details are not described herein again.

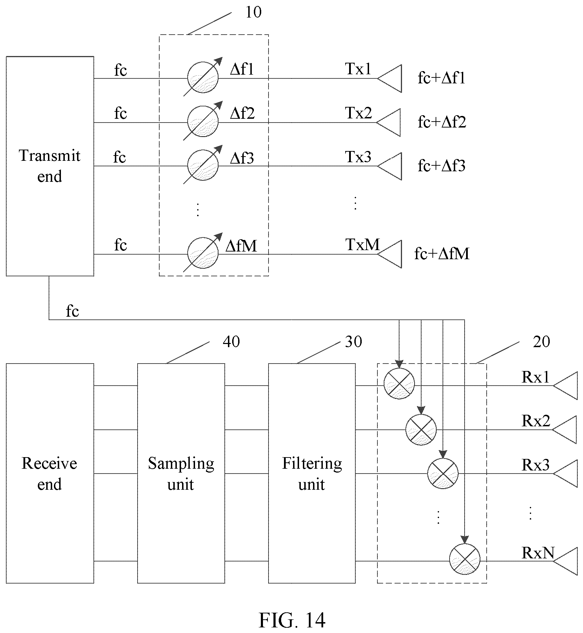

FIG. 14 is a diagram of a structure of a detection apparatus according to an embodiment of this application.

It may be understood that the detection apparatus in this embodiment of this application may be considered as a variation or a supplement to the detection apparatuses shown in FIG. 9 to FIG. 13, or may be considered as an independent solution implementation.

As shown in FIG. 14, the detection apparatus includes M frequency shifters, N receive antennas, N frequency mixers, and the transmit system shown in FIG. 4. For a connection relationship, a signal flow direction, and a function description thereof, refer to the descriptions in FIG. 4, and FIG. 9 to FIG. 13. Details are not described herein again.

In addition, the detection apparatus in this embodiment of this application further includes:
a filtering unit 30 and a sampling unit 40.

The filtering unit 30 is configured to perform filtering processing on the M frequency-mixed signals.

The sampling unit 40 is configured to sample the M frequency-mixed signals on which the filtering processing is performed, to obtain M digital signals, and the M digital signals are used to determine a range to a target.

It may be understood that, the filtering unit in the detection apparatus is configured to perform filtering processing on the M frequency-mixed signals, the sampling unit in the detection apparatus is configured to sample the M frequency-mixed signals on which the filtering processing is performed, to obtain M digital signals, and the M digital signals may be used to perform range ambiguity resolving, so that a sampling capability requirement of the detection apparatus on an ADC can be reduced.

In a possible embodiment, a filtering bandwidth of the filtering unit 30 is greater than at least twice a sampling bandwidth of the sampling unit 40, so that all echo signals obtained after the M transmit signals pass through the target can be received in a lossless manner for range ambiguity resolving.

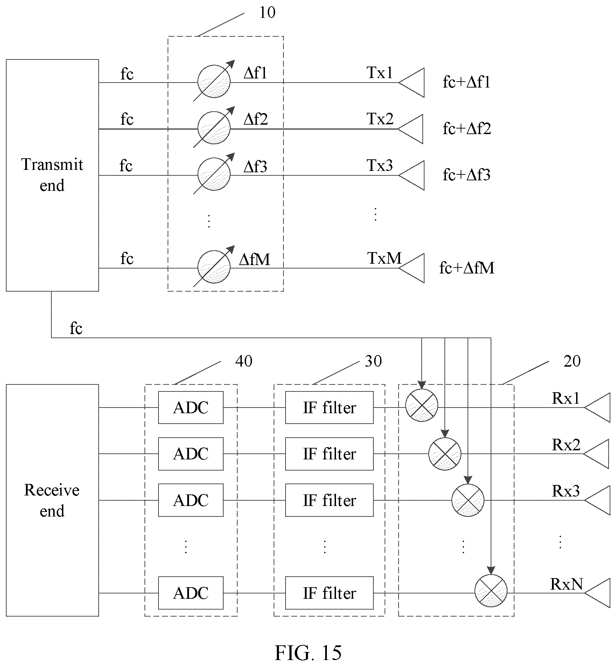

FIG. 15 is a diagram of a structure of a detection apparatus according to an embodiment of this application.

It may be understood that the detection apparatus in this embodiment of this application may be considered as a variation or a supplement to the detection apparatuses shown in FIG. 9 to FIG. 14, or may be considered as an independent solution implementation.

As shown in FIG. 15, the detection apparatus includes M frequency shifters, N receive antennas, a frequency mixing unit 20, a filtering unit 30, a sampling unit 40, and the transmit system shown in FIG. 4. For a connection relationship, a signal flow direction, and a function description thereof, refer to the descriptions in FIG. 4, and FIG. 9 to FIG. 14. Details are not described herein again.

The filtering unit 30 includes:
N intermediate frequency filters.

The N intermediate frequency filters are separately configured to perform filtering processing on the M frequency-mixed signals.

The sampling unit 40 includes:
N analog-to-digital converters.

The N analog-to-digital converters are separately configured to sample the M frequency-mixed signals on which the filtering processing is performed, to obtain M digital signals.

Optionally, filtering processing performed by the N intermediate frequency filters in this embodiment of this application is similar to filtering processing performed by the filtering unit 30 shown in FIG. 14, and sampling processing performed by the N analog-to-digital converters in this embodiment of this application is similar to sampling processing performed by the sampling unit 40 shown in FIG. 14. For details, refer to the foregoing descriptions. Details are not described herein again.

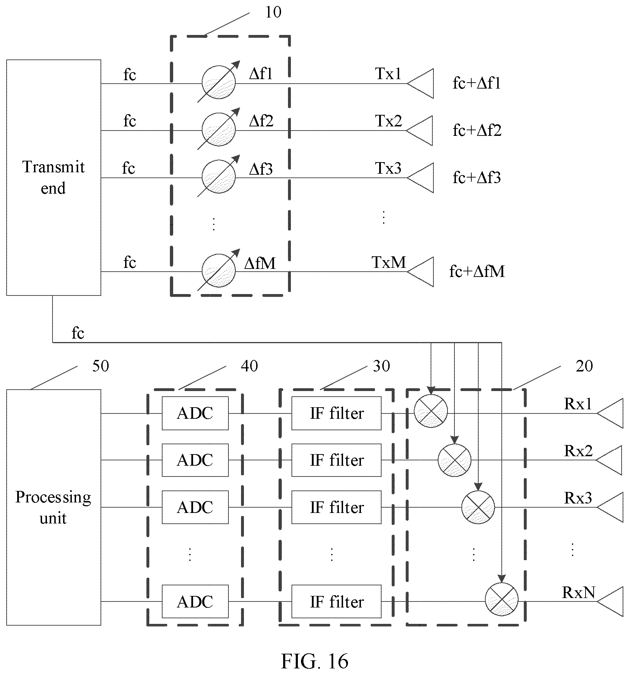

FIG. 16 is a diagram of a structure of a detection apparatus according to an embodiment of this application.

It may be understood that the detection apparatus in this embodiment of this application may be considered as a variation or a supplement to the detection apparatuses shown in FIG. 9 to FIG. 15, or may be considered as an independent solution implementation.

As shown in FIG. 16, the detection apparatus includes M frequency shifters, N receive antennas, N frequency mixers, N intermediate frequency filters, N analog-to-digital converters, and the transmit system shown in FIG. 4. For a connection relationship, a signal flow direction, and a function description thereof, refer to the descriptions in FIG. 4, and FIG. 9 to FIG. 15. Details are not described herein again.

In addition, the detection apparatus in this embodiment of this application further includes:
a processing unit 50.

In one aspect:
The processing unit 50 is configured to determine a correspondence between the M echo signals and the M transmit signals based on the frequency differences between the M transmit signals.

It may be understood that, because the spectrum sampling resources corresponding to the M transmit signals are allocated in the non-uniform manner, and frequency differences between transmit signals corresponding to different transmit antennas are different, the correspondence between the M echo signals and the M transmit antennas can be determined based on the frequency differences between the M transmit signals.

According to embodiments of this application, the correspondence between the M echo signals and the M transmit signals is determined, so that range ambiguity resolving can be implemented, thereby reducing a sampling capability requirement of the transmit system on an ADC.

The processing unit 50 may be further configured to determine a range to the target based on the correspondence between the M echo signals and the M transmit signals.

It may be understood that, in comparison with an original signal on which frequency shift is not performed (that is, one of the M sub-signals), a range value corresponding to an echo signal that corresponds to a transmit signal on which no frequency shift is performed or a smallest frequency shift amount is performed and that is in a range profile formed by the M echo signals is the actual range to the target.

According to embodiments of this application, the actual range to the target can be determined, so that an effective detection range of the detection apparatus can be increased under a same sampling rate condition, or a sampling capability requirement on an ADC can be met under a same detection range requirement.

In another aspect:
The processing unit 50 is configured to determine a correspondence between the M echo signals and the M transmit signals based on an unoccupied frequency band in the W equally-spaced frequency bands.

It may be understood that, because the spectrum sampling resources corresponding to the W equally-spaced frequency bands are allocated in the uniform manner, an unoccupied frequency band in the W equally-spaced frequency bands causes a larger frequency difference between transmit signals corresponding to two transmit antennas. Therefore, a correspondence between the M echo signals and the M transmit antennas may be determined based on the unoccupied frequency band in the W equally-spaced frequency bands.

According to embodiments of this application, the correspondence between the M echo signals and the M transmit signals is determined, so that range ambiguity resolving can be implemented, thereby reducing a sampling capability requirement of the transmit system on an ADC.

The processing unit 50 may be further configured to determine a range to the target based on the correspondence between the M echo signals and the M transmit signals.

It may be understood that, in comparison with an original signal on which frequency shift is not performed (that is, one of the M sub-signals), a range value corresponding to an echo signal that corresponds to a transmit signal on which no frequency shift is performed or a smallest frequency shift amount is performed and that is in a range profile formed by the M echo signals is the actual range to the target.

According to embodiments of this application, the actual range to the target can be determined, so that an effective detection range of the detection apparatus can be increased under a same sampling rate condition, or a sampling capability requirement on an ADC can be met under a same detection range requirement.

It may be understood that the detection apparatuses in FIG. 9 to FIG. 16 are merely used as several examples of detection apparatuses for description, and do not constitute a limitation on this application. An obtained combined structure of the detection apparatus based on a proper deformation of the structure of the detection apparatus shown in any one of FIG. 9 to FIG. 16 falls within the protection scope of this application.

In addition, this application further provides instances in several MIMO detection scenarios based on the transmit system shown in FIG. 4, the detection apparatuses in FIG. 9 to FIG. 16, and the frequency difference design solutions in Solution 1 and Solution 2.

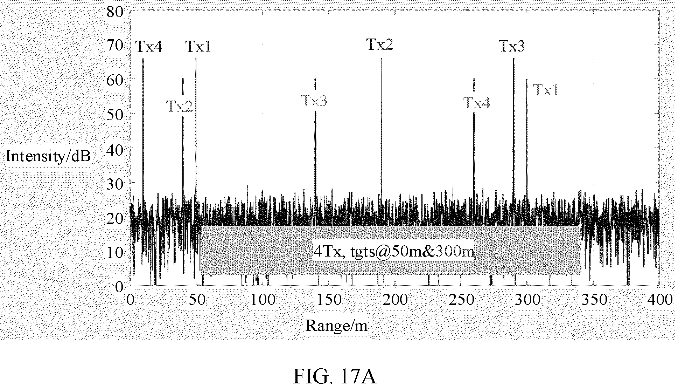

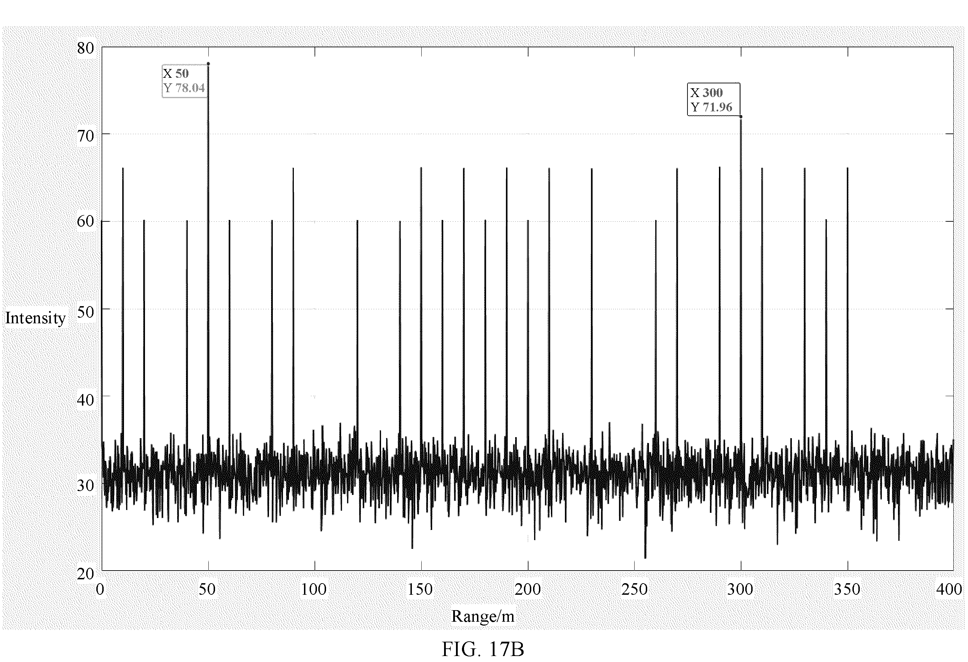

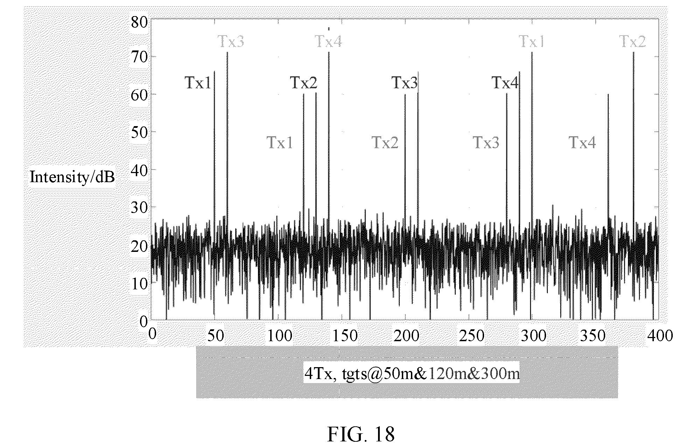

The following provides descriptions with reference to FIG. 17A, FIG. 17B, and FIG. 18.

FIG. 17A is a diagram of a signal one-dimensional profile according to an embodiment of this application.

As shown in FIG. 17A, which shows the diagram of the signal one-dimensional profile corresponding to two targets respectively at 50 m and 300 m.

To detect the foregoing two targets, a transmit system or a detection apparatus having four transmit antennas transmits corresponding transmit signals according to the frequency difference design in Solution 1. To be specific, spectrum sampling resources are divided into four parts in a non-uniform manner, the four parts respectively correspond to four transmit signals, and the four transmit signals are transmitted by the four transmit antennas.

An inherent maximum unambiguous range to the target is 400 m, the target at 50 m is located in a first unambiguous interval (0 m-100 m), and the target at 300 m is located at an edge between a third unambiguous interval (200 m-300 m) and a fourth unambiguous interval (300 m-400 m).

Based on values of frequency differences between the four transmit signals and values of range intervals in the signal one-dimensional profile shown in FIG. 17A, a correspondence between echo signals and the four transmit signals, and a range value corresponding to an echo signal corresponding to each transmit signal in the signal one-dimensional profile can be obtained.

For example, for a target located at 50 m, a range value corresponding to an echo signal corresponding to a transmit antenna Tx1 in the signal one-dimensional profile is 50 m, a range value corresponding to an echo signal corresponding to a transmit antenna Tx2 in the signal one-dimensional profile is 190 m, a range value corresponding to an echo signal corresponding to a transmit antenna Tx3 in the signal one-dimensional profile is 290 m, and a range value corresponding to an echo signal corresponding to a transmit antenna Tx4 in the signal one-dimensional profile is 10 m. It can be seen that the range value corresponding to Tx1 is 50 m, which is an actual range to the target. In this case, the actual range to the target needs to be determined after joint processing is performed on echo signals of other antennas. It should be noted that the transmit antennas "Tx1, Tx2, Tx3, and Tx4" marked in FIG. 17A actually do not exist, and are only marked for convenience of description.

For example, for a target located at 300 m, a range value corresponding to echo information corresponding to a transmit antenna Tx1 in the signal one-dimensional profile is 300 m, a range value corresponding to an echo signal corresponding to a transmit antenna Tx2 in the signal one-dimensional profile is 40 m, a range value corresponding to an echo signal corresponding to a transmit antenna Tx3 in the signal one-dimensional profile is 140 m, and a range value corresponding to an echo signal corresponding to a transmit antenna Tx4 in the signal one-dimensional profile is 260 m. It can be seen that the range value corresponding to Tx1 is 300 m, which is an actual range to the target. In this case, the actual range to the target needs to be determined after joint processing is performed on echo signals of other antennas. It should be noted that the transmit antennas "Tx1, Tx2, Tx3, and Tx4" marked in FIG. 17A actually do not exist, and are only marked for convenience of description.

According to embodiments of this application, measurement of an unambiguous range of 400 m is implemented by using a sampling capability of an ADC that originally corresponds to an unambiguous range of 400/4=100 m, so that an effective detection range of the detection apparatus is increased under a same sampling rate condition. This is equivalent to reducing the sampling capability requirement on the ADC under a same detection range requirement.

FIG. 17B is a diagram of a signal one-dimensional profile according to an embodiment of this application.

As shown in FIG. 17B, in the detection scenario in FIG. 17A, M×N equivalent antenna arrays and M×N equivalent ADC channels can be implemented by using M transmit antennas, N receive antennas, and N ADC channels, to obtain M×N echo signal arrays. The diagram of the signal one-dimensional profile shown in FIG. 17B can be obtained after matching processing is performed on the M×N echo signal arrays.

It can be seen from FIG. 17B that, corresponding signal energy has corresponding peak values at 50 m and 300 m, indicating that actual ranges to the two targets are respectively at 50 m and 300 m.

FIG. 18 is a diagram of a signal one-dimensional profile according to an embodiment of this application.

As shown in FIG. 18, which shows the diagram of the signal one-dimensional profile corresponding to three targets respectively at 50 m, 120 m, and 300 m.

To detect the foregoing three targets, a transmit system or a detection apparatus having four transmit antennas transmits corresponding transmit signals according to the frequency difference design in Solution 2. To be specific, spectrum sampling resources are divided into five parts in a uniform manner, the five parts respectively correspond to five transmit signals, four transmit signals corresponding to any four of the five spectrum sampling resources are respectively transmitted by the four transmit antennas, and a transmit signal corresponding to the one remaining spectrum resource is not transmitted.

An inherent maximum unambiguous range to the target is 400 m, the target at 50 m is located in a first unambiguous interval (0 m-100 m), the target at 120 m is located in a second unambiguous interval (100 m-200 m), and the target at 300 m is located at an edge between a third unambiguous interval (200 m-300 m) and a fourth unambiguous interval (300 m-400 m).

Based on the unoccupied frequency band in the five equally-spaced frequency bands and values of range intervals in the signal one-dimensional profile shown in FIG. 18, a correspondence between echo signals and the four transmit signals, and a range value corresponding to an echo signal corresponding to each transmit signal in the signal one-dimensional profile can be obtained.

For example, for a target located at 50 m, a range value corresponding to an echo signal corresponding to a transmit antenna Tx1 in the signal one-dimensional profile is 50 m, a range value corresponding to an echo signal corresponding to a transmit antenna Tx2 in the signal one-dimensional profile is 130 m, a range value corresponding to an echo signal corresponding to a transmit antenna Tx3 in the signal one-dimensional profile is 210 m, a range value corresponding to an echo signal corresponding to a transmit antenna Tx4 in the signal one-dimensional profile is 290 m, and there is no signal energy distribution in the fourth unambiguous interval (300 m-400 m). It can be seen that the range value corresponding to Tx1 is 50 m, which is an actual range to the target. It should be noted that the transmit antennas "Tx1, Tx2, Tx3, and Tx4" marked in FIG. 18 actually do not exist, and are only marked for convenience of description.

For example, for a target located at 120 m, a range value corresponding to an echo signal corresponding to a transmit antenna Tx1 in the signal one-dimensional profile is 120 m, a range value corresponding to an echo signal corresponding to a transmit antenna Tx2 in the signal one-dimensional profile is 200 m, a range value corresponding to an echo signal corresponding to a transmit antenna Tx3 in the signal one-dimensional profile is 280 m, a range value corresponding to an echo signal corresponding to a transmit antenna Tx4 in the signal one-dimensional profile is 360 m, and there is no signal energy distribution in the first unambiguous interval (0 m-100 m). It can be seen that the range value corresponding to Tx1 is 120 m, which is an actual range to the target. It should be noted that the transmit antennas "Tx1, Tx2, Tx3, and Tx4" marked in FIG. 18 actually do not exist, and are only marked for convenience of description.

For example, for a target located at 300 m, a range value corresponding to echo information corresponding to a transmit antenna Tx1 in the signal one-dimensional profile is 300 m, a range value corresponding to an echo signal corresponding to a transmit antenna Tx2 in the signal one-dimensional profile is 380 m, a range value corresponding to an echo signal corresponding to a transmit antenna Tx3 in the signal one-dimensional profile is 60 m, a range value corresponding to an echo signal corresponding to a transmit antenna Tx4 in the signal one-dimensional profile is 140 m, and there is no signal energy distribution in the third unambiguous interval (200 m-300 m). It can be seen that the range value corresponding to Tx1 is 300 m, which is an actual range to the target. It should be noted that the transmit antennas "Tx1, Tx2, Tx3, and Tx4" marked in FIG. 18 actually do not exist, and are only marked for convenience of description.

According to embodiments of this application, measurement of an unambiguous range of 400 m is implemented by using a sampling capability of an ADC that originally corresponds to an unambiguous range of 400/4=100 m, so that an effective detection range of the detection apparatus is increased under a same sampling rate condition. This is equivalent to reducing the sampling capability requirement on the ADC under a same detection range requirement.

This application provides a chip, and the chip includes a transmit system or a detection apparatus provided in this application.

This application provides a radar or radar system. The radar or the radar system includes the transmit system or the detection apparatus or the chip provided in this application. It should be noted that there may be a plurality of smart sensors integrated with sensors. When the smart sensor includes a millimeter-wave detection function, the smart sensor may also be referred to as a millimeter-wave radar or a millimeter-wave radar system.

This application provides a terminal device. The terminal device includes the transmit system or the detection apparatus provided in this application. For example, the terminal device may be a transportation tool, for example, a transportation means used in any possible scenario, for example, a car, a truck, an aircraft, an uncrewed aerial vehicle, a slow transport vehicle, a spacecraft, or a ship, or may be any device that can carry a millimeter-wave detection apparatus, for example, a surveying and mapping device. One or more transmit systems or detection apparatuses provided in this application are deployed on the terminal device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmit system, wherein the transmit system comprises M transmit antennas, and M is an integer greater than 2;
the M transmit antennas are respectively configured to transmit M transmit signals, and the M transmit signals are used to detect a target; and
the M transmit signals have M different center frequencies, and frequency differences between adjacent center frequencies corresponding to transmit signals in the M transmit signals are different.

2. The transmit system according to claim 1, wherein the M transmit signals are obtained by M frequency shifters respectively performing frequency shift processing on M sub-signals.

3. A detection apparatus, comprising a frequency shift unit and the transmit system according to claim 1 or 2, wherein
the frequency shift unit is configured to perform frequency shift processing on M sub-signals to obtain M transmit signals.

4. The detection apparatus according to claim 3, wherein the frequency shift unit comprises:
M frequency shifters, wherein
the M frequency shifters are respectively configured to perform frequency shift processing on the M sub-signals to obtain the M transmit signals.

5. The detection apparatus according to claim 3 or 4, wherein the detection apparatus further comprises:
N receive antennas, wherein N is an integer greater than 2; and
the N receive antennas are separately configured to receive echo signals corresponding to the M transmit signals.

6. The detection apparatus according to claim 5, wherein the detection apparatus further comprises:
a frequency mixing unit, wherein
the frequency mixing unit is configured to separately perform frequency mixing processing on the M echo signals and one of the M sub-signals to obtain M frequency-mixed signals, and the M frequency-mixed signals are used to determine a range to a target.

7. The detection apparatus according to claim 6, wherein the frequency mixing unit comprises:
N frequency mixers, wherein
the N frequency mixers are separately configured to perform frequency mixing processing on the M echo signals and one of the M sub-signals to obtain the M frequency-mixed signals.

8. The detection apparatus according to claim 6 or 7, wherein the detection apparatus further comprises:
a processing unit; wherein
the processing unit is configured to determine a correspondence between the M echo signals and the M transmit signals based on the frequency differences between the M transmit signals.

9. The detection apparatus according to claim 8, wherein the processing unit is further configured to determine the range to the target based on the correspondence between the M echo signals and the M transmit signals.

10. The detection apparatus according to any one of claims 6 to 9, wherein the detection apparatus further comprises:
a filtering unit and a sampling unit, wherein
the filtering unit is configured to perform filtering processing on the M frequency-mixed signals; and
the sampling unit is configured to sample the M frequency-mixed signals on which the filtering processing is performed, to obtain M digital signals, and the M digital signals are used to determine the range to the target.

11. The detection apparatus according to claim 10, wherein a filtering bandwidth of the filtering unit is greater than at least twice a sampling bandwidth of the sampling unit.

12. The detection apparatus according to claim 11, wherein the filtering unit comprises:
N intermediate frequency filters, wherein
the N intermediate frequency filters are separately configured to perform filtering processing on the M frequency-mixed signals.

13. The detection apparatus according to any one of claims 10 to 12, wherein the sampling unit comprises:
N analog-to-digital converters, wherein
the N analog-to-digital converters are separately configured to sample the M frequency-mixed signals on which the filtering processing is performed, to obtain the M digital signals.

14. A transmit system, wherein the transmit system comprises M transmit antennas, and M is an integer greater than 2;
the M transmit antennas are respectively configured to transmit M transmit signals, and the M transmit signals are used to detect a target; and
center frequencies of the M transmit signals are located on M frequency bands in W equally-spaced frequency bands, wherein W is an integer greater than M.

15. The detection apparatus according to claim 14, wherein the M transmit signals are obtained by M frequency shifters respectively performing frequency shift processing on M sub-signals.

16. A detection apparatus, comprising a frequency shift unit and the transmit system according to claim 14 or 15, wherein
the frequency shift unit is configured to perform frequency shift processing on M sub-signals to obtain M transmit signals.

17. The detection apparatus according to claim 16, wherein the frequency shift unit comprises:
M frequency shifters, wherein
the M frequency shifters are respectively configured to perform frequency shift processing on the M sub-signals to obtain the M transmit signals.

18. The detection apparatus according to claim 16 or 17, wherein the detection apparatus further comprises:
N receive antennas, wherein N is an integer greater than 2; and
the N receive antennas are separately configured to receive echo signals corresponding to the M transmit signals.

19. The detection apparatus according to claim 18, wherein the detection apparatus further comprises:
a frequency mixing unit, wherein
the frequency mixing unit is configured to separately perform frequency mixing processing on the M echo signals and one of the M sub-signals to obtain M frequency-mixed signals, and the M frequency-mixed signals are used to determine a range to a target.

20. The detection apparatus according to claim 19, wherein the frequency mixing unit comprises:
N frequency mixers, wherein
the N frequency mixers are separately configured to perform frequency mixing processing on the M echo signals and one of the M sub-signals to obtain the M frequency-mixed signals.

21. The detection apparatus according to claim 19 or 20, wherein the detection apparatus further comprises:
a processing unit; wherein
the processing unit is configured to determine a correspondence between the M echo signals and the M transmit signals based on an unoccupied frequency band in the W equally-spaced frequency bands.

22. The detection apparatus according to claim 21, wherein the processing unit is further configured to determine the range to the target based on the correspondence between the M echo signals and the M transmit signals.

23. The detection apparatus according to any one of claims 19 to 22, wherein the detection apparatus further comprises:
a filtering unit and a sampling unit, wherein
the filtering unit is configured to perform filtering processing on the M frequency-mixed signals; and
the sampling unit is configured to sample the M frequency-mixed signals on which the filtering processing is performed, to obtain M digital signals, and the M digital signals are used to determine the range to the target.

24. The detection apparatus according to claim 23, wherein a filtering bandwidth of the filtering unit is greater than at least twice a sampling bandwidth of the sampling unit.

25. The detection apparatus according to claim 24, wherein the filtering unit comprises:
N intermediate frequency filters, wherein
the N intermediate frequency filters are separately configured to perform filtering processing on the M frequency-mixed signals.

26. The detection apparatus according to any one of claims 23 to 25, wherein the sampling unit comprises:
N analog-to-digital converters, wherein
the N analog-to-digital converters are separately configured to sample the M frequency-mixed signals on which the filtering processing is performed, to obtain the M digital signals.

27. A radar, wherein the radar comprises the transmit system according to claim 1 or 2, or the detection apparatus according to any one of claims 3 to 13, or the transmit system according to claim 14 or 15, or the detection apparatus according to any one of claims 16 to 26.

28. A terminal device, wherein the terminal device comprises the transmit system according to claim 1 or 2, or the detection apparatus according to any one of claims 3 to 13, or the transmit system according to claim 14 or 15, or the detection apparatus according to any one of claims 16 to 26, or the radar according to claim 27.

29. A vehicle, wherein the vehicle comprises the transmit system according to claim 1 or 2, or the detection apparatus according to any one of claims 3 to 13, or the transmit system according to claim 14 or 15, or the detection apparatus according to any one of claims 16 to 26, or the radar according to claim 27, or the terminal device according to claim 28.
